# EUROPEAN PATENT APPLICATION

(11) **EP 0 953 663 A1**
(43) Date of publication of application: **03.11.1999**
(21) Application number: 99104405.8
(22) Date of filing: 04.03.1999
(51) Int. Cl.: D02J 13/00, G05D 23/19

(54) **Control device for a yarn heater**

(30) Priority: 27.04.1998 JP 11649098
(71) Applicant: Murata Kikai Kabushiki Kaisha, Minami-ku, Kyoto-shi, Kyoto 601 (JP)
(72) Inventor: Onda, Kiyoshi, Higashiosaka-shi, Osaka (JP)
(74) Representative: Liedl, Christine, Dipl.-Chem.

(57) **Abstract**

To provide control device for a yarn heater that can promptly restore the temperature of a heater which has cooled due to an instantaneous service interruption. A controlling section 2 comprises a controlling means 21 for controlling an output amount based on the difference between the output from a temperature sensor and a target temperature, and a power supply monitor 23 for detecting service interruptions and subsequent recoveries. Said controlling means 21 controls the output amount provided after a service recovery based on the detection of a service interruption and subsequent recovery by the power supply monitor 23.

## Description

### Field of the Invention

The present invention relates to a control device for a yarn heater, and in particular, to such a device that can promptly increase the heater temperature up to a target value after an instantaneous service interruption and a subsequent recovery of service.

### Background of the Invention

In the prior art, a yarn heater is installed in a textile machine, as required. The yarn heater is normally controlled by connecting a temperature regulator capable of PID control to a power supply device for the heater. In the textile machine, yarns of the same quality are normally allowed to travel continuously for processing.

The PID control is provided to prevent rapid changes in temperature and ensure that a predetermined target temperature is maintained. In other words, the heater is controlled by both a P operation which provides an output amount proportional to deviations from the predetermined target value, and an I operation, which, if any deviation from the target temperature still remains, accumulates data for the amount of deviation over time to modify it, and a D operation, which attempts to modify instantaneous changes, is rarely used.

While the temperature is being regulated by the PID control, primarily through P and I operations, if an instantaneous service interruption lasting from one second to several tens of seconds before the service can be recovered occurs, it may cause the power charged in the circuit to be used up, resulting in an uncontrollable situation. In that case, the textile machine continues to operate due to inertia, and normal operation can be restored upon service recovery without the yarn being accidentally cut.

In response to a decrease in temperature sensor output caused by the cooling of the heater during said instantaneous service interruption, the temperature regulator executes a normal PID control to return the temperature to the target value. But because, as described above, the PID control in the textile machine mainly comprises the P and I operations, the control is executed to gradually increase the output amount for the heater from the service is restored. Thus, an excessive amount of time is required from the service recovery after the instantaneous service interruption until when the target temperature is reached.

In areas with a stable power supply, such an instantaneous service interruption rarely occurs, so the above-mentioned time difference from the service recovery after the instantaneous service interrution until when the target temperature is reached poses no problem. In areas with an unstable power supply, however, an instantaneous service interruption occurs often. As a result, large quantities of yarns fail to meet predetermined quality standards unless the temperature of the heater is returned promptly to the target value.

The present invention has been provided in view of the shortcomings of the conventional technology, and seeks to provide a control device for a yarn heater that is functional upon service recovery and that promptly increases the heater temperature when this temperature has decreased due to an instantaneous service interruption.

### Summary of the Invention

To achieve the above object, the present invention constitutes a control device for a yarn heater comprising a controlling section for controlling the output amount to the yarn heater, characterized in that the controlling section comprises a controlling means for controlling the output amount based on deviations between an output from a temperature sensor and a target temperature value, and a power supply monitor for detecting service interruptions and recoveries therefrom. Upon service recovery, the controlling means controls the output amount based on the detection of a service interruption and subsequent recovery executed by the power supply monitor.

The present invention is a control device for a yarn heater in that the controlling means comprises a first control mode, in which it controls the output amount based on the deviation between the output from the temperature sensor and the target temperature, and a second control mode in which, upon service recovery, it sends an instruction for greater output amount than the output amount based on said deviation in the first control mode.

As long as the power supply is normal, the normal first control mode using the PID control etc. is used to control the output amount based a the deviation from the target temperature.

If an instantaneous service interruption occurs, causing the power charged in the circuit to be used up and resulting in an uncontrollable situation, and if the service is then recovered promptly, then the heater temperature decreases during the service interruption even if the interruption lasts, for example, only one second or so. Once the service has been recovered, the heater temperature is promptly increased via the second control mode, whereby an instruction is sent to provide a greater output amount than in the normal PID control etc..

The present invention is a control device for a yarn heater characterized in that the output amount in said second control mode is calculated based on the output amount provided in the first control mode prior to the occurrence of the service interruption.

The first control mode varies the output amount to the heater so that the target temperature is reached. Thus, an appropriate output amount can be obtained by setting a high output amount for the second control mode based on the output amount provided upon the occurrence of the service interruption. The reference value can be determined as the output amount provided prior to the service interruption plus α.

The present invention is a control device for a yarn heater characterized in that the controlling means comprises a switching means for switching the second control mode to the first control mode based on the output from the temperature sensor.

The control device calculates the deviation between the output value of the temperature sensor and the target value, and when the deviation reaches the predetermined value close to the target value, changes back to the first mode.

### Brief Description of the Drawing

Figure 1 is a block diagram of a control device for a yarn heater.
Figure 2 is a flowchart showing a control procedure.
Figure 3 is an operation diagram showing how control is executed.
Figure 4 is a layout drawing of a spinning system that includes a heating roller.
Figure 5 is a sectional view of a heating roller having a yarn heater.

### Detailed Description of the Preferred Embodiments

Embodiments of the present invention will be described below with reference to the drawings.

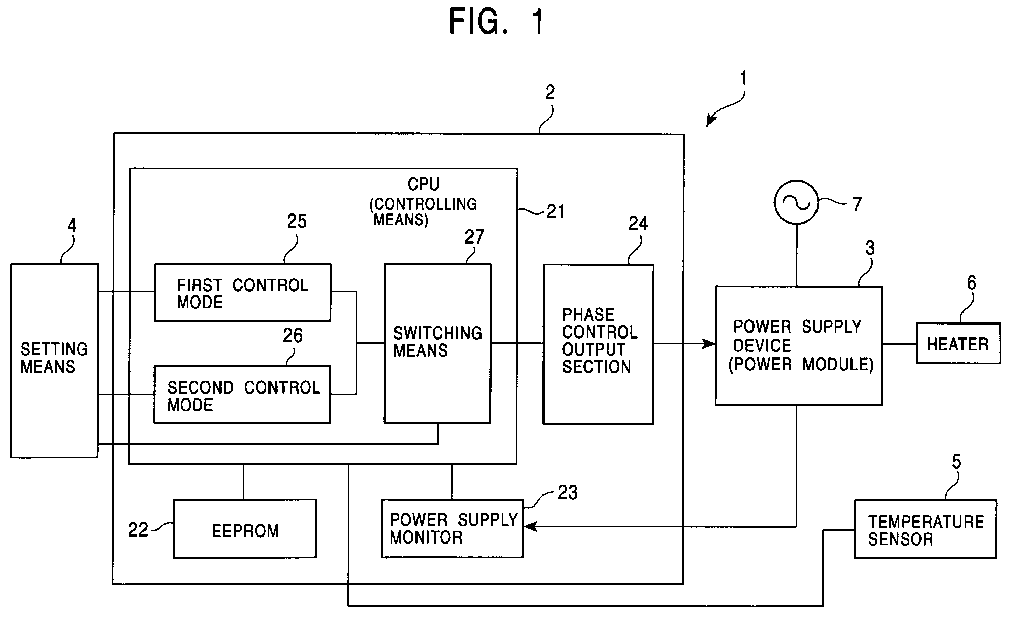

In Figure 1, a control device 1 comprises a controlling section 2 and a power supply device (power module) 3 connected to the controlling section 2. A setting means 4 and a temperature sensor 5 are connected to the controlling section 2. A heater 6 and a power supply 7 are connected to the power supply device 3.

The controlling section 2 is equipped with equipments, such as a CPU 21 which acts as a controlling means, EEPROM 22 which is a storage means to prevent records from being lost during power cuts, a power supply monitor 23, and a phase control output section 24.

The CPU (controlling means) 21 has in its software a first control mode 25 for normal temperature control, a second control mode 26 for transient temperature control executed after the recovery of service which is subsequent to an instantaneously interruption and a switching means 27 for switching from the second control mode 26 to the first control mode 25.

The EEPROM 22 stores the last output amount determined in the first control mode 25 until the service interruption occurs, and the power charged in the circuit is used up and results in an uncontrollable situation. Upon service recovery, the stored output amount is loaded and is made to the base of the calculation of the output amount for the second control mode 26.

The power supply monitor 23 monitors a zero cross of AC voltage signals from the AC power supply 7, and detects a service interruption and a subsequent recovery. The power supply monitor 23 detects a service interruption if it fails to detect the zero cross signal over a predetermined period of time (for example, 5 pulses), and detects a service recovery upon receiving the predetermined zero cross signal again.

The phase control output section 24 controls the phase of the power supply device 3 composed of a thyrister and adjusts the output amount determined by the control in the first control mode 25 or the second control mode 26 to a duty ratio. Based on the output amount from the phase control output section 24 having different duty ratio, the power supply device 3 varies timings with which the AC power supply 7 is turned on or off, and supplies a predetermined power to the heater 6.

The temperature sensor 5 detects the temperature of a predetermined site heated by the heater 6 and outputs it to the CPU 21 in the controlling section 2. Based on an output from the temperature sensor 5, the CPU 21 uses the first control mode 25 or the second control mode 26 to send a predetermined output amount to the phase control output section 24 so as to heat yarns at a target temperature. Thus, the CPU 21 calculates the output amount based on the deviation between the output from the temperature sensor 5 and the target temperature.

The setting means 4 optimally sets a constant required for the first control mode 25 that regulates the temperature using the normal PID control, a constant required for the second control mode 26 that provides transient temperature control, and a constant that sets timings for the switching means 24, depanding on the properties of the equipments.

In a normal equipment configuration, the first control mode 25 controlling the power supply device 3 for the heater 6 by using the PID control etc. and based on the output from the temperature sensor 5 is built into a temperature regulator. If, however, the temperature regulating function including the first control mode 25 and the second control mode 26, is integrated into the controlling means 21 having a CPU capable of software processing, as in the above configuration, communication within the single apparatus makes it possible to easily switch between normal temperature control and the transient control that is executed during a service interruption.

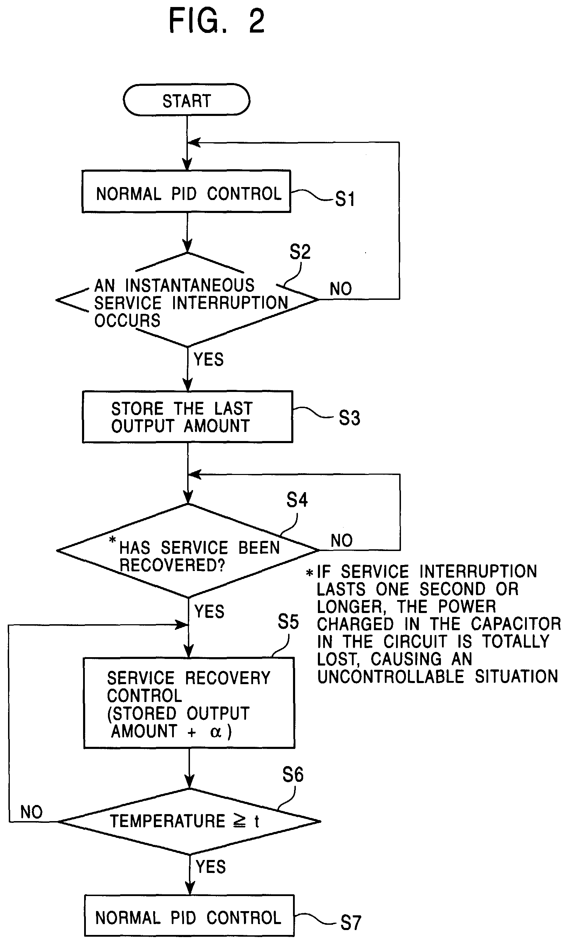

Next, the flow of control will be described with reference to the flowchart in Figure 2 while comparing it with the block diagram in Figure 1. The flow starts with normal PID control executed in the first control mode 25 (S1).

The power supply monitor 23 determines whether an instantaneous service interruption has occurred (S2). The normal PID control is executed until an instantaneous service interruption occurs (S2, No). When an instantaneous service interruption is detected (S2, Yes), the last output amount in the first control mode 25 is output to the EEPROM 22 for storage before the controlling power supply is turned off (S3). The EEPROM 22 keeps storing the last output amount even after the power supply has been completely turned off.

The power supply monitor 23 determines whether the service has been recovered (S4). If not, the process waits for service recovery (S4, No). Upon detection of service recovery (S4, Yes), service recovery control is executed to enter the second control mode 26, which instructs the provision of a output amount that is larger than that provided in the first control mode 25 and that is based on the deviation between the output from the temperature sensor 5 and a target temperature (S5).

The output amount for the second control mode 26 is determined by reading out the last output amount stored at step S3 from the EEPROM 22 and adding +α to the last output amount. +α is, for example, an output amount that is determined only by P operation and that is proportional to the deviation between the output from the sensor 5 and the target temperature.

The temperature sensor 5 monitors the temperature being recovered by the control in the second control mode 26, and compares it with a predetermined temperature t (S6). The predetermined temperature t is, for example, set 5% less than the target temperature. The control is executed in the second control mode 26 until the predetermined temperature t is reached (S6, No). When this occurs (S6, Yes), the process returns to the normal first control mode (S7), and in this case, step 6 constitutes the switching means 27 for switching the second control mode 26 to the first control mode 25. In addition, the service recovery detection in step 4 constitutes the switching means 27 for switching from the first control mode 25 to the second control mode 26.

The loop from step 6 to step 5 is executed over a predetermined time interval. For the first loop, only the P operation determines the amount of +α, and for the second and subsequent loops, the PID control can determine +α. In addition, in the second control mode 26, only the P operation can determine +α for all loops.

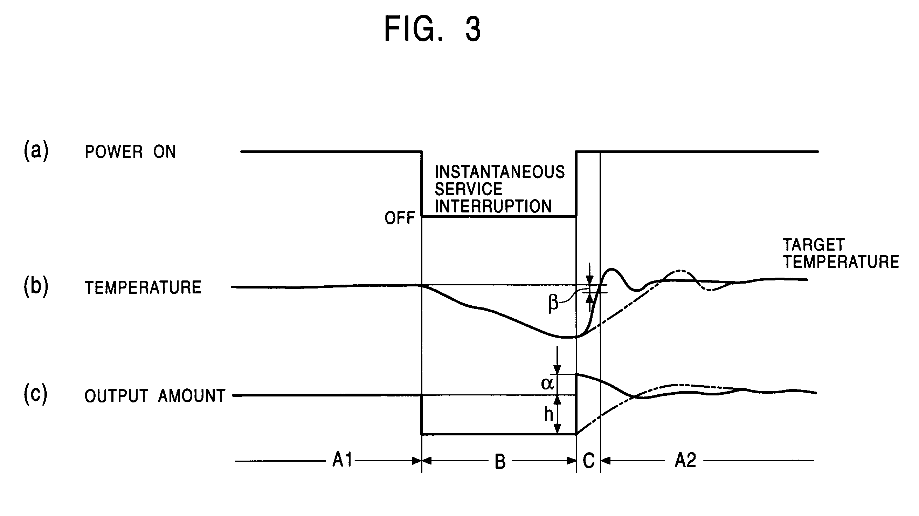

The operation based on the above control will be described with reference to Figure 3. Figure 3(a) shows the power supply, Figure 3(b) shows the temperature, and Figure 3(c) shows the output amount.

An instantaneous service interruption is assumed to occur at the end of section A1. Then the power supply is immediately turned off as shown in Figure 3(a), and the output from the temperature sensor 5 gradually decreases, as shown in Figure 3(b).

It is assumed that the instantaneous service interruption lasts only during section B, and that the service is recovered at the end of section B. Then, the power supply is immediately turned on, as shown in Figure 3(a). As shown in Figure 3(c), the output amount provided in the second control mode after service recovery is higher and equal to the last output amount h+α prior to the occurrence of the instantaneous service interruption. Thus, the output from the temperature sensor 5 is recovered rapidly, as shown in Figure 3(b). At the end of section C, when the output from the sensor 5 reaches a temperature β, which is lower than the target temperature by a predetermined value (for example, by 5%), the switching means 27 switches the second control mode 26 to the first control mode 25 using normal PID control. Then, the temperature settles at the target value with little hunting, as shown in section A2.

With only the PID control executed in the first control mode 25, the power output amount gradually increases as shown by the two-dot chain line in Figure 3(c), so a larger amount of time is required before the target temperature is reached, as shown by the two-dot chain line in Figure 3(b). The present invention allows the target temperature to be reached in a shorter time after service recovery.

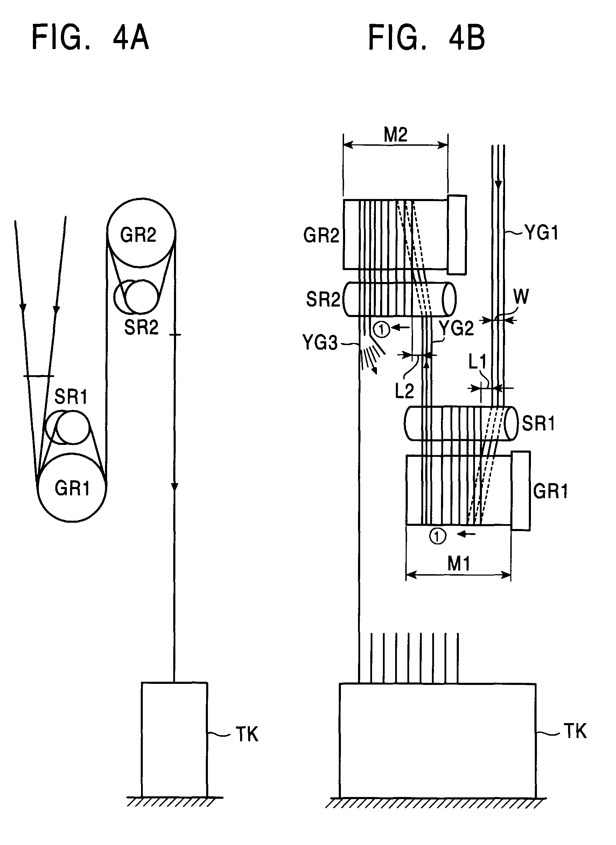

Next, as a textile machine using a heating roller having incorporated therein a yarn heater to which the above control device is applied, a spinning system will be described that includes a godet roller installed between a spinning machine and a spinned-yarn winding machine to draw yarns. Figure 4A is a frontal view of the spinning system, and Figure 4B is a side view thereof.

The godet roller had two sets, namely, one set of a first heating roller GR1 and a first separation roller SR1, and one set of a second heating roller GR2 and a second separation roller SR2. A spinning machine (not shown in the drawings) provides several (for example, 8) spinned yarns, which enter the first heating roller GR1 as a group YG1 of yarns constituting a vertical row of width W. The yarns are then wound several times between the first heating roller GR1 and the first separation roller SR1. In this case, the first separation roller SR1 is placed diagonally so that the group of spinned yarns YG1 can move smoothly in the horizontal direction relative to the first heating roller GR1.

In addition, a group of spinned yarns YG2 from the first heating roller GR1 enter the second heating roller GR2. The yarns are then wound several times between the second heating roller GR2 and the diagonally placed second separation roller SR2. A group of spinned yarns YG3 from the second heating roller GR2 are developed in the direction of the roller shaft and are wound on individual packages in a spinned-yarn winding machine TK.

The spinned yarns YG2 between the heating rollers GR1 and GR2 are drawn. If the peripheral-velocity ratio between the heating rollers GR1 and GR2 is, for example, GR2/GR1 is equal to 1.5, the yarns are drawn between the rollers GR1 and GR2 so that their length is increased by 1.5 times. That is, the draw ratio is equal to peripheral velocity of GR2/peripheral velocity of GR1. Using a godet roller whose heating rollers GR1 and GR2 have different peripheral velocities, spinned yarns of nylon or polyester filaments are drawn into FDY (Full Draw Yarn).

As shown in Figure 4B, the group of spinned yarns YG1 are wound several times between the first heating roller GR1 and the first separation roller SR1, and then between the second heating roller GR2 and the second separation roller SR2, while being subjected to a driving force and heated. The yarns finally reach the spinned-yarn winding machine (not shown in the drawings) with the predetermined draw ratio maintained. To avoid interference between the group of spinned yarns that have been wound several times and the adjacent spinned yarns, a specified distance L1 is required between the spinned yarns YG1 on the first heating roller GR1. Likewise, a specified distance L2 is required between the spinned yarns YG2 on the second heating roller GR2. We to the distances L1 and L2 and the number of windings, the first and second heating rollers GR1 and GR2 have specified lengths M1 and M2, respectively.

In addition, the heating rollers GR1 and GR2 each have a heater 6 built therein, and a contact or noncontact thermometers are provided at an appropriate position on the outer circumferences of the heating rollers GR1 and GR2. The control device 1 provides feedback control so as to maintain each roller surface at a predetermined target temperature.

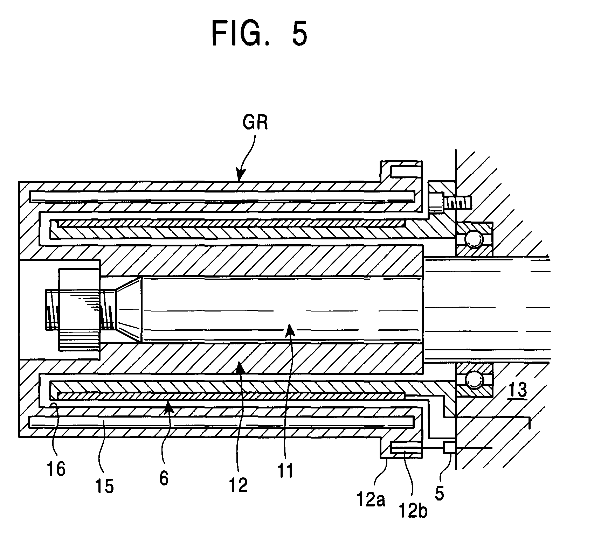

As shown in Figure 5, the heating roller GR is constructed by fitting and fixing a roller body 12 in a rotating shaft 11 and fixing the heater 6 in a housing 13. A plurality of heat pipes 15 extending in the axial direction of the roller are buried in the outer circumference of the roller body 12 in the circumferential direction at an equal pitch, so that heat from the heater 6 is distributed around the roller. In addition, a ring-like space 16 is formed in the roller body 12 inside the heat pipes 15 so that a heating section of the heater 6 is inserted into the space 16 to supply a quantity of heat to the heat pipes 15. In addition, a ring-like slit 12b is formed in a flange 12a of the roller body 12 so that the temperature sensor 5 is inserted into the slit 12b. Instead of this groove detection method using the fixed temperature sensor 5, a rotation transmission detection method may be used in which a temperature sensor rotating together with the roller body 12 is buried near the heat pipes 15.

The heater 6 is connected to the power supply device 3 in Figure 1. The temperature sensor 5 is connected to the controlling section 2 in Figure 1. With such a godet roller, inertia allows yarn to pass through despite an instantaneous service interruption, and the temperature gradually decreases due to the large heat capacity of the roller body 12. Thus, the application of the present control device allows thetemperature of the roller body 12 to return to the target value in a short time, thereby minimizing the production of substandard yarn that might result from insufficient heating.

The present invention can increase the temperature of the heater in a short time after a service recovery. This configuration minimizes the production of substandard yarn resulting from insufficient heating.

The present invention uses, as a reference value, the output amount provided upon the occurrence of a service interruption to determine a higher output amount. Thus, the temperature can approach the target value in a short time regardless of the magnitude of the target temperature.

The present invention switches to the first control mode with PID control etc. based on the output from the temperature sensor. This configuration can eliminate or mitigate hunting that may occur near the target temperature due to the higher output amount in the second control mode.

## Claims

1. A control device for a yarn heater comprising a controlling section for controlling an output amount to the yarn heater, characterized in that:
said controlling section comprises a controlling means for controlling said output amount based on the deviation between the output from a temperature sensor and a target temperature, and a power supply monitor for detecting service interruptions and recoveries, and in that said controlling means controls said output amount upon service recovery based on the detection of the service interruption and subsequent recovery executed by said power supply monitor.

2. A control device for a yarn heater according to Claim 1 characterized in that said controlling means comprises a first control mode, in which it controls said output amount based on the deviation between the output from the temperature sensor and the target temperature, and a second control mode, in which upon service recovery, it sends an instruction for the provision of a greater output amount than that provided in the first control mode based on said deviation between the output from a temperature sensor and a target temperature.

3. A control device for a yarn heater according to Claim 2 characterized in that said output amount in said second control mode is calculated based on the output amount provided in said first control mode prior to the occurrence of a service interruption.

4. A control device for a yarn heater according to Claim 2 or Claim 3 characterized in that said controlling means comprises a switching means for switching said second control mode to said first control mode based on the output from said temperature sensor.
